# EUROPEAN PATENT APPLICATION

(11) **EP 1 767 280 A1**
(43) Date of publication of application: **28.03.2007**
(21) Application number: 06003159.8
(22) Date of filing: 16.02.2006
(51) Int. Cl.: B05B 13/06, B22D 17/20, B29C 33/72

(54) **Automated unit for depositing separating agent into moulds**

(30) Priority: 22.09.2005 SI 200500271
(71) Applicant: Koroski Holding d.o.o., 2380 Slovenj Gradec (SI)
(72) Inventor: Grabnar, Dusan, 2000 Maribor (SI); Gorsek, Dusan, 2370 Dravograd (SI)
(74) Representative: Vonnemann, Gerhard

(57) **Abstract**

Automated unit for depositing a liquid separating agent (11) into cores (10) of moulds (4), consisting of a simple and all-around movable, but compact construction.
On a bearing pillar (1) there is a cantilever (2) and a movable housing (3) with injector nozzles (9). Moulds (4) are travelling towards it on a conveyor (5), which enables the movement in strokes. The injection of a separating agent (11) is carried out into a closed mould or one ajar by the air slit (12).

## Description

The subject of the invention is an automated central unit for depositing of separating agent into moulds, or more precisely, it is a central unit for automatic injecting of the separating agent onto inner surfaces of closed moulds, which serve for production of inserts from polyurethane foam, preferentially in the automotive industry.

According to the international patent classification this invention belongs to B 05B 13/06 and additionally to B 05C 7/02 and to 29C 33/44.

The technical problem solved by this invention is such a construction of the central unit, which will make possible a completely automatic deposit or injection respectively of the liquid separating agent into closed moulds, which will travel along or through this unit by a conveyor, namely in the stroke mode. It will further enable the separating agent deposit technological operation execution onto inner surfaces of the core of passer-by moulds with no human presence, the deposit will be faster and more uniform, the separating agent consumption considerably lower, the separating agent harmful impacts on people and the environment will be negligible, and its construction will thereby be simple and three-dimensionally flexible.

For easier removal of polyurethane foamy inserts from the tool, prior to filling by polyurethane components, it is required to deposit the liquid separating agent on the inner surface of hollow, empty spaces inside individual moulds, of the so called product nest. The product nest is a name for a hollow or empty space respectively between the mould upper and nether half, wherein products or foamy pieces are formed in the foaming procedure. The separating agent will thus be used as an agent, which is deposited into moulds prior to filling by polyurethane components for forming bare polyurethane foam, and it disables polyurethane foam to stick with the nest wall in the mould. The latter is very important for simple and easier removing of foamy inserts from moulds and consequently achieving the quality products surface. Application and quality deposit of the separating agent in the foamy inserts production procedure is however of the key importance. It applies however that the separating agent must be as much uniformly deposited as possible over the entire mould interior, as in the opposite case the polyurethane foam product can stick to it, and by removing the product from the mould deformations appear on its surface consequently. The separating agent consists of various chemical substances like solvents and solid particles, therefore, it is harmful both for people and the wide environment.

To date most highly spread known solution is based on depositing the separating agent by means of kinetic or electrostatic energy onto inner surfaces of moulds, or onto surfaces of the product nest respectively, namely by injecting the separating agent into open moulds. This method of depositing the separating agent is carried out by means of pneumatic or electrostatic injector guns, namely manually, semiautomatically and automatically by a robot. Weakness and deficiency of these known methods is above all in the fact that the separating agent deposit into the moulds interior is carried out from outside and into open moulds respectively. For this reason, the separating agent consumption is big, deposits are non-uniform and above all very aggravating and harmful for people and the environment. Experiences have shown that the separating agent losses amount to about 40%. For this reason, the moulds outer walls, workers and vicinity are therewith highly loaded by the spurted separating agent Therefore, it is each time required to clean moulds and their nearby working environment, what represents a harmful impact both on operators and on the environment, and not last but least, it represents stoppages and large expenses in the procedure itself. For the workers and environment protection, it is therefore required to build special explosion safe ventilation systems in the production premises, and which are not completely safe, and which additionally require each time replacement of contaminated filters.

According to the document GB 8618616, a procedure of forming products from an unsaturated artificial resin is known, whereby dust is deposited into an open tool. Deficiency of this known solution is in the fact that the deposit is executed from outside and into the open tool, and it deals with the deposit of powder and not of the liquid separating agent. Further, its weakness is in expensive purifying plants and in its harmful impact on the environment and human health.

According to the document DE 103 20 341 there is known an injector device and the procedure of injecting products from polyurethane containing an external mixing and a suitable nozzle. It solves mixing of A+B components of polyurethane in the said space inside the tool or moulds respectively. In this way generated polyurethane is then deposited on a suitable product mould. It is namely its deficiency that it fails to resolve the separating agent deposit, and it is neither applicable in the polyurethane foamy products procedure.

The problem that has remained unsolved is above all in the deposit of a liquid separating agent into the product nest, namely at an open tool or mould respectively, which is above all harmful to people and the environment, and besides the deposit is non-uniform, and the separating agent losses are big.

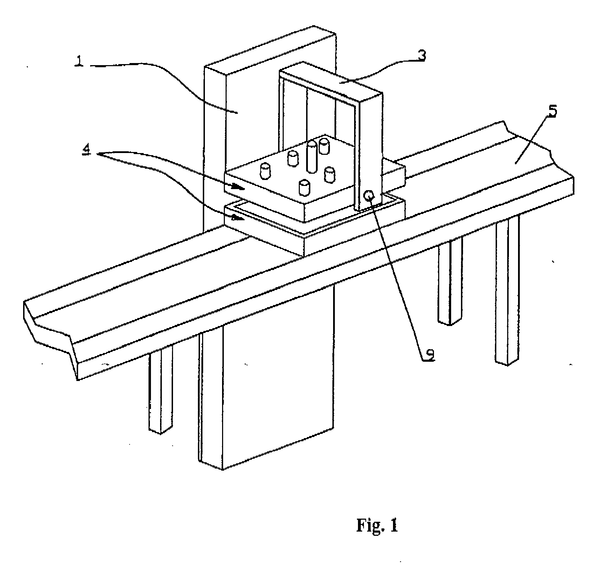

According to the invention, the problem is resolved by the automated central unit for depositing of separating agent into moulds for making inserts from polyurethane foam, having injector nozzles for depositing the separating agent into the closed mould, movably built in the frame, which is together with the cantilever likewise movably fastened to a suitable bearing pillar, whereby moulds travel along or through the unit respectively in the stroke mode. The invention will be described following an example of its feasibility and figures, which show
Fig. 1 Automated central unit in the axonometric projection according to the invention
Fig. 2 Automated central unit in the lateral view according to the invention, with a closed mould in the axial cross section

According to the invention, the automated central unit for depositing of separating agent into moulds is constructed by the bearing pillar 1, cantilever 2 and housing 3 with injector nozzles 9, and alongside the conveyor 5 is placed.

The bearing pillar 1 is preferentially of fixed construction. To the bearing pillar 1 there is movably fastened the cantilever 2, which is constructed in the way of being movable into at least one, two or thee directions. In the feasible example according to the invention, the cantilever 2 is movable three-dimensionally, as it is movable along the bearing pillar 1 in the vertical, as well as in transverse direction, and it is also movable in the horizontal direction towards the conveyor 5 and vice versa.

To the free end of the cantilever 2 there is fastened the housing 3 in the way of being movable around the restraint axis in the radius which is not smaller than 90°. In the lateral wall of the housing 3 there are built-in the injector nozzles 9, at least one on each side in the way that they are fixed inside their beds, but they can also be movable. Injector nozzles 9 can be optional, but of applicable construction for this purpose. The housing 3 can be fixed, but it can also be constructed in the way of possible adjusting its width and height, depending on sizes and forms of moulds 4. One of possibilities is that the housing 3 is of a telescopic construction. But it applies that the housing 3 must be constructed in the way that the mould 4 can linearly move through it, under it, or alongside it,

The separating agent 11 storing container together with a pressure pump can be located inside or outside the bearing pillar 1, and the distributive system for its feed into the injector nozzles 9 is of standard construction.

In some other feasible example there can be movable bearing pillar I, namely in the way that it is adjustable by height and flexible linearly and/or radially. In this case the cantilever 2 can be fixed to it. Likewise, the bearing pillar 1, cantilever 2 and housing 3 with injector nozzles 9 can in the sense of movability be constructed in an optional interactive combination of previously described feasible options.

Likewise, in some other feasible example according to the invention, the automated central unit for depositing of separating agent into moulds is constructed without the bearing pillar 1 with the cantilever 2 in the way that the housing 3 with injector nozzles 9 is likewise movable fastened to the unmarked frame of the conveyor 5.

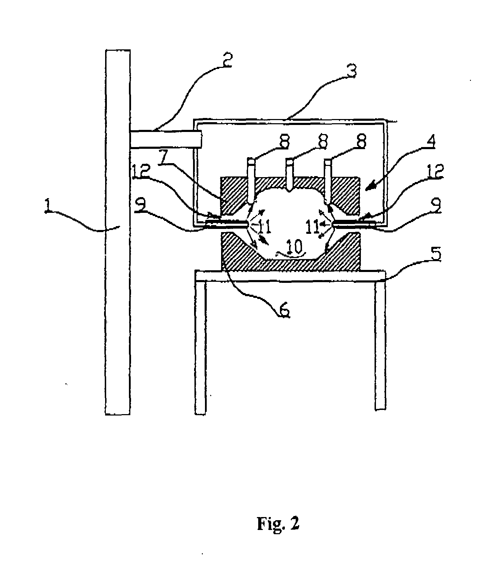

In Fig. 2 there is shown that along the bearing pillar 1 with the cantilever 2 the conveyor 5 is placed in the way that its conveying surface is located under the housing 3 with injector nozzles 9. In the feasible example where the mould 4 travels along the housing 3, there is also suitably placed the conveyor 5 along it.
The conveyor 5 can be of optional suitable construction with conditions that it is of a stroke construction and that the position of its conveying surface can be adjusted to the interactive correct position of injector nozzles 9 and to the air slit 12 between the nether part 6 and upper part 7 of moulds 4. Therewith, the procedure execution of the separating agent 11 injection into cores 10 inside moulds 4, which travel by the conveyor 5 is made possible.

As previously already said, the mould 4 consists of the nether part 6 and upper part 7, which in the closed position form a joint inner hollow space or the core 10 respectively, which is simultaneously the nest of the product, in our case the insert from polyurethane foam. In the area of sealing surfaces or in the divisible plane of the mould 4, its nether part 6 and its upper part 7 are distant from each other by the air slit 12. The air slit 12 size is namely optional, but its minimum size is defined by injector nozzles 9 dimensions, and its maximum size is conditioned by efficient pressure equalisation inside the core 10. To avoid overpressure, which in the opposite case can be created by injecting the separating agent 11 in the core 10.

In the shown feasible example, there are in the upper part 7 of the mould 4 built-in the automatic tap nozzles 8, which with their free ends extend into the core 10. Their number is optional, and their sorting is likewise optional.

In the shown feasible example according to the invention, both injector nozzles 9 in the housing 3 are constructed or located respectively in the way that they can move through the air slit 12 from the lateral side linearly in or along the core 10 edge of the mould 4 and backwards. In some other feasible example, the housing 3 can be constructed in the way that injector nobles 9 move closer to the cores 10 from the opposite side or combined.

It applies for all previously described feasible examples that the number of injector nozzles 9 in individual housings 3 is optional, as their locations inside this housing 3 are also optional. The latter thus depends on the purpose and construction of the moulds 4, and consequently on the form and properties of therein manufactured polyurethane foamy inserts.

It applies thereby that so many injector nozzles 9 must be built in the housing 3 that a uniform injection or deposit respectively of the liquid separating agent 11 is made possible over the entire volume of the core 10 or over all its surfaces simultaneously.

According to the invention, the constituent joints motion of the automated central unit for depositing of separating agent into moulds, namely the bearing pillar 1 and/or cantilevers 2 and/or housing 3 with injector nozzles 9 is preferentially robotised and interactively process harmonised, and on request also synchronised, what also applies for the motion of the conveyor 5 with moulds 4, as well as for the separating agent 11 injection.

As already mentioned in the preamble of this invention, before the filling of polyurethane components in the moulds 4 the adequate liquid separating agent 11 should be injected. According to the invention, for this purpose the moulds 4, sequentially a bit distant from each other, travel by the conveyor 5 in the direction towards the automated central unit for depositing of separating agent into moulds. In this technological operation, the moulds 4 are in the closed position or in the ajar position respectively, in which their nether part 6 and upper part 7 are distant from each other only by the air slit 12, which prevents creation of overpressure and makes the pressure equalisation inside the core 10 possible.

According to the invention, when the nearest mould 4 arrives in the operating area of the automated central unit or in the operating area of its housing 3, it stops. The housing 3 is by means of the cantilever 2 placed in the position, which enables injector nozzles 9 to linearly move through the air slit 12 to the core 10. There follows the separating agent 11 injection under pressure into the core 10. Thereby, haze is created and it enables a uniform deposit of the separating agent 11 over the entire surface of the inner core 10_ Then, the injector nozzles 9 from the mould 4 are removed and the housing 3 is returned to the primary or starting position respectively. The conveyor 5 restarts and brings the following mould 4 into the operating area of the housing 3 with injector nozzles 9, what is cyclically repeated through the entire procedure.

The quantity and time of the separating agent 11 injection through the injector nozzles 9 into the core 10 of the mould 4 are defined by a suitable programme inside the technological procedure, which is as a rule specific for each type of products from polyurethane foam or specific to this product adjusted moulds 4 respectively. And it applies that the quantity and geometry of the separating agent 11 deposit into the mould 4 intended for production of polyurethane foamy inserts should be defined optimal as to the required specificity of an individual product and therewith of the mould 4.

As previously already described, according to the invention the procedure of the separating agent 11 deposit into the cores 10 of the moulds 4 with the automated central unit for depositing of separating agent into moulds, is carried out at closed or by the air slit 12 ajar moulds 4. In this way, the separating agent 11 deposit from outside into the open mould 4 is omitted. For this reason, the separating agent 11 deposit is more rational, more uniform, and also faster. Empirical tests have shown that according to the invention, by depositing the liquid separating agent 11 through injector nozzles 9 into the moulds 4, up to 40% of the separating agent 11 is saved by the automated unit. Consequently, the workers and environment load by the harmful contents of the separating agent 11 is reduced, after the deposit operation the moulds 4 are cleaner, therefore, the cleaning costs are lower. As the separating agent 11 injection is automated or robotised respectively, the workers presence in this operation is not required. According to the invention, by applying the automated central device the investments in demanding and expensive explosive safe ventilation systems are also omitted, and consequently replacing and depositing waste and by the separating agent 11 contaminated filters.

## Claims

1. The automated central unit for depositing of separating agent into moulds is **characterised by the fact** that in the bearing pillar (1) there is preferentially linearly movably built at least one cantilever (2), to which the housing (3) with injector nozzles (9) is fastened in the way that it is flexible at least in one straight direction, and/or in the radial or circular direction respectively; that motions of the cantilever (2), housing (3) with injector nozzles (9) and the conveyor (5) are interactively process harmonised, preferentially robotised, and on request also synchronised, what equally applies for the separating agent (11) injection through injector nozzles (9) into the core (10) of the moulds (4).

2. The automated central unit according to claim 1 **is characterised by the** fact that the housing (3) is preferentially constructed in the way to be adjustable both by width and by height.

3. The automated central unit according to claim 1 **is characterised by the fact** that in the housing (3) there is built-in an optional number of likewise optionally arranged injector nozzles (9), which can be inside their beds fixed and/or movable.

4. The automated central unit according to claim 1 **is characterised by the fact** that the conveyor (5) is of stroke construction.

5. The automated central unit according to claim 1 is **characterised by the fact** that the housing (3) is preferentially radially rotating for at least 90°.

6. The mould adjustment procedure and the separating agent deposit procedure execution by the automatic central unit is **characterised by the fact** that during the procedure of the liquid separating agent (11) deposit through injector nozzles (9) into cores (10), the nether part (6) and the upper part (7) of the mould (4) are distant from each other for an optional air slit (12) for preventing the overpressure creation inside the core (10).

7. The procedure according to claim 6 is **characterised by the fact** that for a uniform deposit of a liquid separating agent (11) over the entire surface of the core (10) there is a condition that injector nozzles (9) are integrated in the housing (3) in the way that inside the air slit (12) in the mould (4) they are suitably set, arranged and directed towards the core (10) at a suitable angle.

8. The procedure according to claim 6 is **characterised by the fact** that optimal parameters like quantity, time and geometry of the separating agent (11) deposit depend on demands of individual products or inserts respectively from polyurethane foam, and thereby consequently on specificity of the cores (10) construction inside the moulds (4).
